# EUROPEAN PATENT APPLICATION

(11) **EP 3 432 216 A1**
(43) Date of publication of application: **23.01.2019**
(21) Application number: 18182050.7
(22) Date of filing: 05.07.2018
(51) Int. Cl.: G06K 9/62, G06K 9/00

(54) **LEARNING DATA GENERATION DEVICE, LEARNING DATA GENERATION METHOD, AND RECORDING MEDIUM STORING PROGRAM**

(30) Priority: 21.07.2017 JP 2017142149
(71) Applicant: Panasonic Intellectual Property Corporation of America, Torrance, CA 90503 (US)
(72) Inventor: TANIGAWA, Toru, Osaka 540-6207 (JP); SHODA, Yukie, Osaka 540-6207 (JP); IMOMOTO, Seiya, Osaka 540-6207 (JP)
(74) Representative: Eisenführ Speiser

(57) **Abstract**

Techniques of simplifying a process of performing an annotation process and constructing learning data by using CG data are provided. A learning data generation device generates scene data for generating learning data from scene data of CG data that include various models. In the generation, the models other than a specific object model are deleted from the scene data, the specific object model is made a specific color, and a specific object region of the specific object model is set. Then, the image for scene data and information of the specific object region are associated with each other and stored as the learning data in a second storage unit.

## Description

### BACKGROUND

### 1. Technical Field

The present disclosure relates to a learning data generation device, a learning data generation method, and a recording medium storing a program.

### 2. Description of the Related Art

In construction of learning data for machine learning or the like, an annotation such as a label is added to image data for recognition of image data. For example, Japanese Unexamined Patent Application Publication No. 2010-211732 discloses an object recognition device that recognizes a shape and an action of an object. The object recognition device creates a three-dimensional computer graphics (3DCG) image of a target object, creates a 2D image in which the 3DCG image is projected to a two-dimensional plane, and sets this 2D image as a learning image of the shape of the target object.

### SUMMARY

For example, in complicated 3DCG data such as a city, a very large amount of calculation is requested for calculation of the appearance of each model in the city as seen from a certain point of view from arrangement positions of models such as persons and vehicles that are included in the city and relative positional relationships among the models. In a case where such 3DCG data are used to add annotations to the target objects and to construct learning data, huge calculation is requested for the construction of the learning data.

One non-limiting and exemplary embodiment provides a learning data generation device, a learning data generation method, and a recording medium storing a program for simplifying a process of performing an annotation process and constructing learning data by using CG data.

In one general aspect, the techniques disclosed here feature a learning data generation device that generates learning data by using CG data which include various models. The learning data generation device includes: a first storage unit that stores scene data which include information of a sight whose image is captured by a camera model among the models in the CG data; a model setting unit that performs a setting of the model which is included in the scene data and generates scene data for generating learning data from the scene data; an image generation unit that generates an image for scene data from the scene data and generates an image for learning data from the scene data for generating learning data; an object region setting unit that sets a specific object region which is a region of a specific object model in object models among the models in the image for learning data; and a second storage unit that stores the image for scene data and information of the specific object region, which are associated with each other, as the learning data. In a case where the scene data for generating learning data are generated, the model setting unit selects the specific object model from the object models, deletes the models other than the specific object model from the scene data, and makes the specific object model a specific color.

A learning data generation device and so forth according to the present disclosure may simplify a process of performing an annotation process and constructing learning data by using CG data.

It should be noted that general or specific embodiments may be implemented as a system, a device, a method, an integrated circuit, a computer program, a computer-readable recording medium such as a recording disk, or any selective combination thereof. The computer-readable recording medium includes a non-volatile recording medium such as a compact disc-read only memory (CD-ROM), for example.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a block diagram that illustrates one example of an outline configuration of an image recognition system which includes a learning data generation device according to an embodiment;
Fig. 2 is a diagram that illustrates an application example of the learning data generation device of Fig. 1 and a target object recognition device;
Fig. 3 is a diagram that illustrates one example of a model of a neural network;
Fig. 4 is a flowchart that illustrates one example of a process flow in which the learning data generation device according to the embodiment constructs a recognition model;
Fig. 5 is a flowchart that illustrates one example of a process flow in which the learning data generation device according to the embodiment generates learning data;
Fig. 6 is a schematic diagram that illustrates one example of a scene image that is generated from scene data by a rendering unit of the learning data generation device according to the embodiment;
Fig. 7A is an example of an image for annotation of a target model A;
Fig. 7B is an example of the image for annotation of a target model B;
Fig. 7C is an example of the image for annotation of a target model C;
Fig. 7D is an example of the image for annotation of a target model D;
Fig. 7E is an example of the image for annotation of a target model E;
Fig. 8A is a diagram that illustrates an example of an annotation frame which is set for the target model A of the image for annotation of Fig. 7A;
Fig. 8B is a diagram that illustrates an example of the annotation frame which is set for the target model B of the image for annotation of Fig. 7B;
Fig. 8C is a diagram that illustrates an example of the annotation frame which is set for the target model C of the image for annotation of Fig. 7C;
Fig. 8D is a diagram that illustrates an example of the annotation frame which is set for the target model D of the image for annotation of Fig. 7D;
Fig. 8E is a diagram that illustrates an example of the annotation frame which is set for the target model E of the image for annotation of Fig. 7E;
Fig. 9 is a diagram in which the annotation frames of the target models are superimposed on the scene image of Fig. 6;
Fig. 10 is a diagram that illustrates an example of annotation information which is stored in a second storage unit;
Fig. 11 is a flowchart that illustrates one example of a process flow in which the target object recognition device according to the embodiment recognizes a target object from an image;
Fig. 12 is an example of the image for annotation that includes plural target models;
Fig. 13 is a diagram in which a region which includes the target models B to D in Fig. 12 is enlarged; and
Fig. 14 is a diagram in which the target model C in Fig. 13 is enlarged.

### DETAILED DESCRIPTION

### [Underlying Knowledge Forming Basis of the Present Disclosure]

The inventors related to the present disclosure, that is, the present inventors have discussed use of techniques that use a neural network such as deep learning in order to improve precisions of recognition and detection of target objects such as persons and objects in an image. Recognition of a target object in deep learning requests massive learning image data. Further, in the learning image data, the target object is labeled, that is, information that includes contents, a position, a region, and so forth of the target object is added as annotation information to the target object. Addition of the annotation information is also referred to as addition of annotation. The present inventors considered that in the future, not only recognition and detection of the target object from an image but also recognition of an action of the target object, and further prediction of an action of the target object might be demanded. As examples of the action of the target object, recognition or prediction of a dangerous action of a surrounding target object such as rush-out of a pedestrian from an image by a camera in autonomous driving of an automobile, recognition or prediction of criminal behavior such as theft from an image by a camera with respect to a surveillance camera, and so forth are raised. However, such examples are rare cases, which do not occur on a daily basis.

Currently, construction of the learning image data is performed in general by using images that are actually photographed by cameras. Because rare cases such as the above examples are not often included in images that are actually photographed, it is difficult to collect sufficient learning image data about such cases, and the collection requests a long period. Thus, the present inventors have discussed generation of the learning image data of rare cases by using CG data.

For example, in a case where learning image data that are used for autonomous driving of an automobile are generated, 3DCG data that represent an environment in which an automobile travels such as city 3DCG data may be used. In the 3DCG data, images that are captured by a camera having a driver seat of an automobile as the point of view are used for the learning image data. Then, annotations are added to target objects such as persons and vehicles, which are depicted in a generated image. The techniques disclosed in Japanese Unexamined Patent Application Publication No. 2010-211732, which are mentioned in "Description of the Related Art", cannot handle calculation of the appearances of target objects whose images are captured by the camera from the arrangement positions of the target objects and the relative positional relationships among the target objects. Such calculation is difficult for the techniques, and a very large amount of calculation time is requested. Accordingly, the present inventors have conceived the techniques that are described in the following in order to simplify a process of performing an annotation process and constructing learning data by using 3DCG data.

A learning data generation method according to one aspect of the present disclosure is a learning data generation device that configured to generate learning data by using CG data which include a plurality of models. The learning data generation device includes: a processor; and a memory storing thereon a computer program, which when executed by the processor, causes the processor to perform operations including acquiring first scene data that include one or more parameters related to the plurality of models in the CG data, generating a scene data image using the one or more parameters included in the first scene data, selecting a specific object model from a plurality of object models which are included in the plurality of models, setting the one or more parameters to delete other models which are other than the specific object model and to make the specific object model a specific color, to generate second scene data, generating a learning data image using the set one or more parameters which are included in the second scene data, setting a specific object region that is a region of the specific object model in the learning data image, generating the scene data image and information of the specific object region, which are associated with each other, as the learning data, and recording the learning data into a recording medium.

In the above aspect, the second scene data for generating learning data are generated by deleting the models other than the specific object model from the first scene data. Such a process of generating the second scene data for generating learning data is simple, and a processing amount may thus be suppressed to a low amount. In addition, because the second scene data for generating learning data include only the specific object model in a specific color as the model, a data amount may be suppressed to a low amount. Such a process in which the image generation unit generates the image for learning data from the second scene data for generating learning data is simple, and the processing amount may thus be suppressed to a low amount. Further, the image for learning data includes only the specific object model as a photographed object. Thus, a process in which the object region setting unit specifies and sets the specific object region is simple, and the processing amount may thus be suppressed to a low amount. In such a manner, a series of annotation processes of setting the specific object region from the second scene data is simple, and the processing amount may thus be suppressed to a low amount. Further, the information of the specific object region is applied to the learning data. Thus, the learning data generation device may simplify a process of performing the annotation process and constructing the learning data by using CG data.

In the learning data generation device according to one aspect of the present disclosure, in the selecting, a plurality of specific object models may be selected, and the second scene data may be generated for each of the plurality of specific object models.

In the above aspect, the scene data for generating learning data are generated for each of the plural specific object models that are included in the scene data. That is, the scene data for generating learning data are generated for each of the specific object models. Thus, even in a case where the scene data include the plural specific object models, it is possible to set the specific object region of each of the specific object models by using the image for learning data, which is generated from each set of the scene data for generating learning data.

In the learning data generation device according to one aspect of the present disclosure, in the selecting, the plurality of specific object models may be selected. In the setting of the one or more parameters, the other models other than the plurality of specific object models may be deleted from the first scene data, and specific colors which are applied to the plurality of specific object models may be different from each other. In the generating of the learning data image, the learning data image may be generated from the second scene data that include the plurality of specific object models. In the setting of the specific object region, in a case where other specific object model is superimposed on a part of area of one specific object model in the learning data image, a region of the one specific object model which does not include the part of area may be set as the specific object region.

In the above aspect, the second scene data for generating learning data that include the plural specific object models are generated. In addition, in the image for learning data that is generated from the second scene data for generating learning data, the specific object region of each of the specific object models is specified. In this case, because the specific colors of the specific object models are different among the different specific object models, specifying each of the specific object regions becomes easy. For example, it is possible to easily set the specific object regions of the specific object models that overlaps with each other in the image for learning data based on the difference in the specific color. Such a specific object region may target a region of the specific object model, which is not covered by the other specific object model but is seen. That is, the specific object region may target a portion of the region of the specific object model. Accordingly, the learning data that use the specific object region may target an image of a portion of the specific object model. Thus, a recognition model that is constructed by using such learning data may improve the precision of detection of the target object from an image.

In the learning data generation device according to one aspect of the present disclosure, in the setting of the specific object region, an annotation frame that surrounds the specific object region may be formed in the learning data image, and information of the annotation frame may be generated as the information of the specific object region.

In the above aspect, because the specific object region is defined by the annotation frame, setting of the specific object region becomes easy. For example, the shape, size, and position of the annotation frame are decided, and the specific object region may thereby be decided. Such information of the annotation frame is manageable data as input data of the specific object region in the learning data in machine learning such as deep learning.

In the learning data generation device according to one aspect of the present disclosure, in the setting of the one or more parameters, one of the plurality of models in the first scene data may be changed, and in the generating of the learning data image, the scene data image that is associated with the information of the specific object region may be generated from the first scene data in which the one of the plurality of models is changed.

In the above aspect, the image for first scene data that is generated from the first scene data may include an image that is generated from changed first scene data. Accordingly, in the learning data, combinations of the image for scene data and the information of the specific object region, which are associated with each other, may be increased. Thus, variations of the learning data increase, and the recognition model that is constructed by using such learning data may improve the precision of detection of the target object from an image.

In the learning data generation device according one aspect of the present disclosure, in the setting of the specific object region, an annotation frame that surrounds the specific object region may be formed in the learning data image, and information of the annotation frame is set as the information of the specific object region. In the setting of the one or more parameters, the one of the plurality of models in the first scene data may be changed based on the information of the annotation frame.

In the above aspect, because the specific object model is subject to a change based on the information of the annotation frame in a case where the first scene data are changed, regeneration of the information of the annotation frame for the changed specific object model may become simple or unnecessary. Thus, simplification of a changing process of the scene data becomes possible.

In the learning data generation device according to one aspect of the present disclosure, in the setting of the one or more parameters, the specific object model in the first scene data may be changed. In the generating of the learning data image, a changed image of (i) the changed specific object model and (ii) surroundings of the changed specific object model may be generated based on the information of the specific object region of the specific object model to be changed. And in the setting of the specific object region, the specific object region of the changed specific object model may be set based on the changed image.

In the above aspect, the information of the annotation frame may be regenerated in response to the change of the specific object model. Accordingly, the degree of freedom of the change of the specific object model increases. Thus, in the learning data, variations of the specific object region of the specific object model increase.

In the learning data generation device according to one aspect of the present disclosure, the setting of the one or more parameters may include determining whether interference between the changed specific object model and other object models is present or not, and the specific object model is not changed in a case where the interference is present.

In the above aspect, it becomes possible to change the specific object model smoothly and in accordance with the actual situation. For example, a case where the changed specific object model interferes with the other object model in an overlapping manner is a case with low realizability, and it is possible that such a case is not included in the learning data. Thus, the detection precision of the recognition model may be improved.

In the learning data generation device according to one aspect of the present disclosure, in the setting of the one or more parameters, in a case where an interfering portion between the changed specific object model and the other object model may be included in a region that is not depicted by the scene data image, the specific object model may be changed regardless of presence or absence of the interference.

In the above aspect, because the interfering portion that is not depicted in the scene data image, is excluded from targets of the assessment, simplification of a changing process of the specific object model becomes possible.

In the learning data generation device according to one aspect of the present disclosure, in the setting of the one or more parameters, the specific object model may be not changed in a case where the changed specific object model becomes larger than the specific object model.

In the above aspect, the assessment about presence or absence of the interference between the changed specific object model and the other object model becomes unnecessary. Thus, simplification of the changing process of the specific object model becomes possible.

A learning data generation method according to one aspect of the present disclosure is a learning data generation method of generating learning data from CG data that include a plurality of models. The learning data generation method includes: acquiring first scene data that include one or more parameters related to the plurality of models in the CG data, generating a scene data image using the one or more parameters included in the first scene data, selecting a specific object model from a plurality of object models which are included in the plurality of models, setting the one or more parameters to delete other models which are other than the specific object model and to make the specific object model a specific color, to generate second scene data, generating a learning data image using the set one or more parameters which are included in the second scene data, setting a specific object region that is a region of the specific object model in the learning data image, generating the scene data image and information of the specific object region, which are associated with each other, as the learning data, and recording the learning data into a recording medium. The above aspect may provide effects similar to the learning data generation device according to one aspect of the present disclosure.

A learning data generation program according to one aspect of the present disclosure causes a computer to execute: acquiring first scene data that include one or more parameters related to a plurality of models in CG data, generating a scene data image using the one or more parameters included in the first scene data, selecting a specific object model from a plurality of object models which are included in the plurality of models, setting the one or more parameters to delete other models which are other than the specific object model and to make the specific object model a specific color, to generate second scene data, generating a learning data image using the set one or more parameters which are included in the second scene data, setting a specific object region that is a region of the specific object model in the learning data image, generating the scene data image and information of the specific object region, which are associated with each other, as the learning data, and recording the learning data into a recording medium. The above aspect may provide effects similar to the learning data generation device according to one aspect of the present disclosure.

It should be noted that above general or specific embodiments may be implemented as a system, a device, a method, an integrated circuit, a computer program, a computer-readable recording medium such as a recording disk, or any selective combination thereof. The computer-readable recording medium includes a non-volatile recording medium such as a CD-ROM, for example.

### [Embodiment]

A learning data generation device 100 and so forth according to an embodiment of the present disclosure will hereinafter be described in detail with reference to drawings. Note that the embodiment described in the following illustrates general or specific examples. Values, shapes, configuration elements, arrangement positions and connection manners of configuration elements, steps, orders of steps, and so forth that are described in the following embodiment are examples and are not intended to limit the present disclosure. Further, the configuration elements that are not described in the independent claims which provide the most superordinate concepts among the configuration elements in the following embodiment will be described as arbitrary configuration elements. Further, in the descriptions of the following embodiment, expressions accompanying "substantially" such as substantially parallel and substantially orthogonal may be used. For example, substantially parallel not only means being perfectly parallel but also means being substantively parallel, in other words, including differences of approximately several percent, for example. This also applies to other expressions accompanying "substantially". Further, the diagrams are schematic diagrams and are not necessarily strictly illustrated. In addition, in the diagrams, the same reference characters are given to substantively the same configuration elements, and repeated descriptions may be omitted or may be simplified.

### [1-1. Configuration of Learning Data Generation Device]

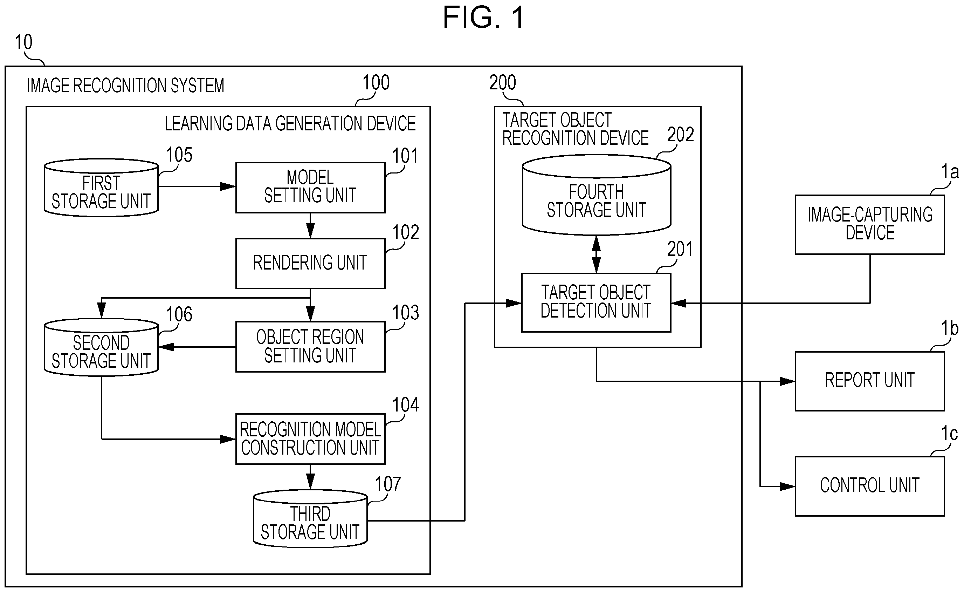

Configurations of the learning data generation device 100 according to the embodiment and an image recognition system 10 that includes the learning data generation device 100 will be described with reference to Fig. 1. Note that Fig. 1 is a block diagram that illustrates one example of an outline configuration of the image recognition system 10 which includes the learning data generation device 100 according to the embodiment. The image recognition system 10 constructs a recognition model for detecting a target object in an image and detects the target object included in an image by using the recognition model. The image recognition system 10 includes the learning data generation device 100 and a target object recognition device 200.

The learning data generation device 100 adds annotations to target objects in an image that is photographed by an image-capturing device (hereinafter also referred to as photographed image) and in a CG image and generates data for learning (hereinafter also referred to as learning data) for constructing a recognition model. In addition, the learning data generation device 100 constructs a recognition model for detecting a target object from an image by using the generated learning data. A learning model, which will be described later, is applied to construction of the recognition model. The learning data are data that are used by the recognition model for performing learning. The learning data include photographed images, CG images, and information of annotations that are added to the photographed images and the CG images. The information of an annotation includes contents such as a type and action of the target object in the image and information such as a position and region of the target object.

The learning data generation device 100 causes the recognition model to perform learning by using the learning data and thereby constructs the recognition model with improved detection precision. In this embodiment, the learning model that is applied to the recognition model is a machine learning model that uses a neural network such as deep learning but may be another learning model. For example, the learning model may be a machine learning model that uses a random forest, genetic programming, or the like.

The target object recognition device 200 uses the recognition model that is constructed by the learning data generation device 100 to detect the target object in an image that is acquired by the image recognition system 10. In addition, the target object recognition device 200 outputs a detection result of the target object.

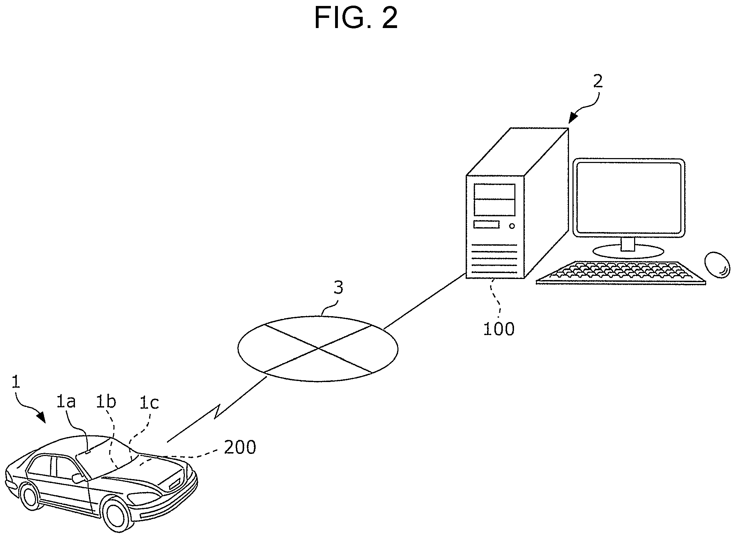

In the description made below, as illustrated in Fig. 2, a description will be made on an assumption that the target object recognition device 200 is mounted on a moving body, specifically, an automobile 1 and the learning data generation device 100 is mounted on a server 2 in a separate position from the automobile 1. The target object recognition device 200 of the automobile 1 and the server 2 are connected together via wireless communication and communicate with each other via a communication network 3 such as the Internet. The learning data generation device 100 and the target object recognition device 200 transmit and receive information via the wireless communication. To the wireless communication, a wireless local area network (LAN) such as Wireless Fidelity (Wi-Fi®) may be applied, or another kind of wireless communication may be applied. The server 2 may be an information processing device such as a computer. The server 2 may include one or more servers or may configure a cloud system.

The learning data generation device 100 may include a wireless communication device such as a communication circuit or may use a wireless communication device that is included in the server 2. The target object recognition device 200 may include a wireless communication device such as a communication circuit or may use a wireless communication device that is included in the automobile 1. Note that the learning data generation device 100 and the target object recognition device 200 may not be connected together via the wireless communication but may be connected together via wired communication or may exchange information with each other via a recording medium such as a non-volatile memory.

Further, the learning data generation device 100 may be mounted on the automobile 1 in a case where a computer mounted on the automobile 1 is capable of performing processes. In this case, the learning data generation device 100 and the target object recognition device 200 may be integrated. Further, the learning data generation device 100 may exchange information with the outside of the automobile 1 via wireless communication, wired communication, or a recording medium.

In addition, specific configurations of the learning data generation device 100 and the target object recognition device 200 of the image recognition system 10 will be described with reference to Fig. 1. Note that in the description made below, a description will be made about a case where the image recognition system 10 uses 3DCG data for generating the learning data. The 3DCG data include information or the like about various virtual objects (hereinafter, a virtual object will also be referred to as model) that are arranged in a three-dimensional space. Further, in this embodiment, an example will be described where the 3DCG data are city 3DCG data. However, the 3DCG data that are applied to the image recognition system 10 may be 3DCG data of any environment. The learning data generation device 100 includes a model setting unit 101, a rendering unit 102, an object region setting unit 103, a recognition model construction unit 104, a first storage unit 105, a second storage unit 106, and a third storage unit 107. Here, the rendering unit 102 is one example of an image generation unit.

The first storage unit 105, the second storage unit 106, and the third storage unit 107 may store various kinds of information and may extract stored information. The first storage unit 105, the second storage unit 106, and the third storage unit 107 are realized by storage devices such as a read-only memory (ROM), a random access memory (RAM), a semiconductor memory such as a flash memory, a hard disk drive, or a solid state drive (SSD), for example. The first storage unit 105 stores scene data in the 3DCG data. The scene data include information about all elements that are included in a sight whose image is captured by a camera which is arranged in a city or the like represented by the 3DCG data. Specifically, for example, the scene data may include not only models of objects (referred to as object model) such as persons, vehicles, and buildings that are included in the sight but also various models such as a position and a direction of the camera, a light source (referred to as light source model) of the sight, information of a background (referred to as background model) of the sight, and information of an environment (referred to as environment model) of the sight. The camera whose position and direction are set in the 3DCG data is also referred to as camera model. Models are various elements that configure the three-dimensional space of the 3DCG data. In the three-dimensional space, various items such as a type, a shape, dimensions, arrangement, an action, a working, and changes over time are set for a model. Further, the first storage unit 105 may store all the 3DCG data.

For example, as this embodiment, in a case where the 3DCG data are data of a city, the whole city is formed as a three-dimensional model. The city 3DCG data may include information of various models that configure the city such as information about the object models such as contents such as types and actions, shapes, and arrangement of the object models such as persons, vehicles, buildings, and other structures, which are included in the city, information of the light source models such as the sun and illuminations, information of the background models, and information of the environment models of the weather and so forth such as rain and fog. The object models include immovable object models such as buildings, roads, attachments to roads, parking lots, parks, plants, and other structures and mobile object models such as persons, animals, and vehicles. The 3DCG data may display various sights whose images are captured by the camera model by arbitrarily setting the position and direction of the camera model in the 3DCG data. For example, in a case where the position of the camera model is a driver seat of an automobile, the 3DCG data may display the sights that are seen from the driver seat of the automobile. The scene data that are generated from the 3DCG data may include information about various models that are included in a sight whose image is captured by the camera model. That is, the scene data are data that correspond to the camera model. For example, in a case where the camera model moves together with a traveling automobile, the scene data include animation information that indicates the change of each model in accordance with the movement of the camera model.

The second storage unit 106 stores an image that is generated from the scene data in the first storage unit 105 and the information of the annotation that is added to the target object in the image by the learning data generation device 100 while associating the information of the annotation with the image. The third storage unit 107 stores the recognition model that is constructed by the learning data generation device 100.

The model setting unit 101 performs settings of the models that are included in the 3DCG data and the scene data. For example, the model setting unit 101 sets the light source model in the 3DCG data and the scene data. The light source model may be the sun or may be a light source such as an illumination for displaying each of the models in the image. The model setting unit 101 may change how the models in the image generated from the scene data are displayed by setting the state of the light source model. For example, the model setting unit 101 may delete the light source model.

Further, the model setting unit 101 performs changes in the settings for the models such as changes of the models other than the light source model and changes in the arrangement. Further, in the scene data in which the light source model is deleted, the model setting unit 101 sets the model to be a target of processes as the target model and also performs a process of deleting the models other than the target model. Such a model setting unit 101 performs a process of setting only the target model as a displayed target for the scene data. Here, the target model is one example of a specific object model.

Further, the model setting unit 101 sets textures and parameters of materials in the 3DCG data and the scene data. Specifically, the model setting unit 101 sets the texture of the model in the 3DCG data and the scene data. Further, the model setting unit 101 sets the parameter of the material that indicates the material quality of the object such as optical characteristics and a material feeling for the model in the 3DCG data and the scene data. Further, in the scene data in which the models other than the target model are deleted, the model setting unit 101 also performs a process of setting the texture of the target model. In this case, the model setting unit 101 sets the texture of the target model to a specific color such as white. The model setting unit 101 may set the texture such that the target model becomes luminous. Further, in the scene data in which the models other than the target model are deleted, the model setting unit 101 may also perform a process of setting the parameter of the material of the target model to a specific material. Here, the scene data in which the texture of the target model is set to a specific color is one example of scene data for generating learning data.

The rendering unit 102 generates an image based on information about the image. For example, the rendering unit 102 generates an image of a sight whose image is captured by the camera model which is set for the scene data from the scene data. In a case where the scene data include the animation information, the rendering unit 102 generates images of plural frames that configure the animation from one set of scene data. Further, the rendering unit 102 also performs a process of generating an image that includes the target model from the scene data in which the model setting unit 101 sets the texture of the target model to a specific color. For example, in a case where the texture of the target model is set to white, the rendering unit 102 generates an image in which the region of the target model is white and the background is black.

The object region setting unit 103 sets a region of the model to be a target in an image. For example, in an image that is generated by the rendering unit 102 from the scene data in which the texture of the target model is a specific color, the object region setting unit 103 sets the position, shape, and size of the region of the target model. Here, the region of the target model is one example of a specific object region. For example, the object region setting unit 103 sets an annotation frame that surrounds a white region, which is the region of the target model in the image, from the outside as the region of the target model. In this case, the object region setting unit 103 sets an annotation frame of a polygon such as a square, which is circumscribed around the white region of the target model, for example. In addition, the object region setting unit 103 specifies the position and size of the annotation frame in the image. In such a manner, the object region setting unit 103 specifies the position, shape, and size of the annotation frame and thereby sets the region of the target model. Note that the object region setting unit 103 may set the region of the target model without using the annotation frame.

Further, the object region setting unit 103 correlates the contents such as a type and an action of the target model with information such as the position, shape, and size of the annotation frame of the target model and stores those as annotation information of the target model in the second storage unit 106. As described above, the object region setting unit 103 adds the annotation to the target model in the image. Further, the object region setting unit 103 associates the unprocessed image that corresponds to the image used for addition of the annotation to the target model with the annotation information. The unprocessed image is an image that represents the same sight as the image used for addition of the annotation to the target object, that is, an image of the same camera model and the unprocessed image is an image that is generated from the scene data in which the above-described process such as deletion of the models by the model setting unit 101 is not performed.

The recognition model construction unit 104 constructs the recognition model by using the annotation information of the target model and the image corresponding to the annotation information, which are stored in the second storage unit 106, as the learning data. The recognition model construction unit 104 uses the image for which annotation is conducted as input data. Further, the recognition model construction unit 104 causes the recognition model to perform learning such that an output result of the recognition model, to which the input data are input, indicates the target model. That is, the recognition model construction unit 104 reconstructs the recognition model. Causing the recognition model to perform learning means reconstructing the recognition model such that the result as the correct answer to the input data is output. The recognition model construction unit 104 uses various images of various target models as the input data, repeats reconstruction of the recognition model such that the target models as the correct answers are output, and thereby improves the output precision of the recognition model. The recognition model construction unit 104 stores the recognition model that is caused to perform learning by repeating reconstruction in the third storage unit 107.

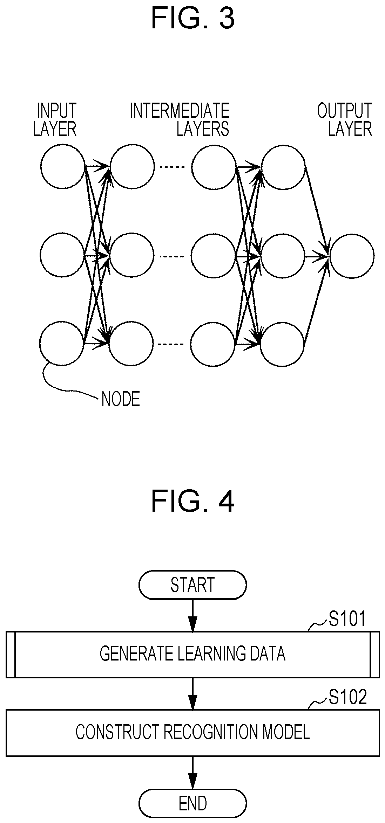

In this embodiment, the recognition model construction unit 104 uses a neural network in a learning model of the recognition model. For example, referring to Fig. 3, one example of a model of a neural network is illustrated. A neural network is an information processing model that uses the cranial nervous system as a model. The neural network is configured with plural node layers that include an input layer and an output layer. The node layer includes one or more nodes. Model information of the neural network indicates the number of node layers that configure the neural network, the number of nodes included in each of the node layers, and a type of the whole neural network or each of the node layers. For example, in a case where the neural network is configured with the input layer, one or more intermediate layers, and the output layer, with respect to information input to a node of the input layer, the neural network sequentially performs an output process from the input layer to the intermediate layer, a process in the intermediate layer, an output process from the intermediate layer to the next intermediate layer or to the output layer, a process in the output layer, and so forth and thereby outputs an output result that conforms to input information. Note that each node of one layer is connected with each node in the next layer, and the connection between the nodes is weighted. The weight to the connection between the nodes is added to information of the node of one layer, and the information is then output to the node of the next layer. The number of nodes of each of the input layer, the intermediate layers, and the output layer may variously be set.

The recognition model construction unit 104 inputs the image of the target model in the annotation frame to the neural network. To each node of the input layer, characteristics extracted from the image of the target model are input. In addition, the recognition model construction unit 104 optimizes the weight between the nodes of the neural network such that an output from the neural network matches the contents of the target model that are included in the annotation information. By such adjustment of the weight, the recognition model construction unit 104 causes the neural network to learn the relationship between an input image and the contents of the target model and reconstructs a neural network with high output precision. The recognition model construction unit 104 uses the above-described reconstructed neural network as the recognition model.

Note that the recognition model construction unit 104 may optimize the weight between the nodes of the neural network such that the type and action of the target model that are output from the neural network match the type and action of the target model that are included in the annotation information. The neural network that is constructed in such a manner may not only detect the target model but may also detect an action that is being performed or is to be performed by the target model based on the image that is input.

Configuration elements of the learning data generation device 100 that are configured with the model setting unit 101, the rendering unit 102, the object region setting unit 103, and the recognition model construction unit 104, which are described above, may each be configured with a computer system (not illustrated) that is formed with a central processing unit (CPU), a RAM, a ROM, and so forth. The CPU uses the RAM as a working memory to execute a program recorded in the ROM, and a portion or all of functions of the configuration elements may thereby be achieved. Further, a portion or all of functions of the configuration elements may be achieved by a dedicated hardware circuit such as an electronic circuit or an integrated circuit. The program may in advance be recorded in the ROM or may be provided as an application that is provided by communication via a communication network such as the Internet, communication by a mobile communication standard, another wireless network, a wired network, broadcasting, or the like.

Further, the target object recognition device 200 includes a target object detection unit 201 and a fourth storage unit 202. The target object detection unit 201 acquires the recognition model that is stored in the third storage unit 107 from the learning data generation device 100 of the server 2 via the wireless communication or the like and stores the recognition model in the fourth storage unit 202. When the learning data generation device 100 updates the recognition model, the target object detection unit 201 uses the newest updated recognition model to update the recognition model stored in the fourth storage unit 202. Similarly to the first storage unit 105 and so forth, the fourth storage unit 202 is realized by storage devices such as a ROM, a RAM, a semiconductor memory such as a flash memory, a hard disk drive, or an SSD, for example.

The target object detection unit 201 acquires an image that is photographed by an image-capturing device 1a from the image-capturing device 1a that is mounted on the automobile 1. The image-capturing device 1a is a camera that generates a digital image, for example, and outputs a movie and/or a still image. The target object detection unit 201 detects the target object in the acquired image by using the recognition model. Specifically, the target object detection unit 201 inputs the acquired image to the recognition model stored in the fourth storage unit 202 and acquires an output result of the recognition model. The target object detection unit 201 extracts various characteristics from the image and inputs the extracted characteristics as input information to the recognition model. The recognition model outputs the contents such as the type and action, the position, and so forth of the target object included in the image based on the input information. The target object detection unit 201 outputs the contents such as the type and action, the position, and so forth of the target object as a detection result. The target objects are persons and vehicles, for example, but may be various objects such as attachments to roads such as plantations on roads, road signs, road markings, and traffic signals, obstacles on roads such as barricades for road construction, and animals. The vehicles may be automobiles, large freight vehicles, buses, specialized vehicles, motorcycles, bicycles, other light vehicles, and so forth.

The target object detection unit 201 may output the detection result to a report unit 1b that is mounted on the automobile 1 or may output the detection result to a control unit 1c such as an electronic control unit (ECU) of the automobile 1. The report unit 1b may be configured with a display and/or a speaker and reports the acquired detection result to a driver of the automobile 1. The display may be configured with a liquid crystal display panel or a display panel of organic or inorganic electro luminescence (EL) or the like. In a case where the automobile 1 includes an autonomous driving function, the control unit 1c controls the action of the automobile 1 based on the acquired detection result. For example, in a case where the detection result indicates a person who is crossing the road, the control unit 1c performs control to stop or decelerate the automobile 1. The autonomous driving function may be a function for assisting a portion of driving of the automobile such as collision avoidance braking or lane keeping or may be a function that covers the whole of driving.

The above-described configuration of the target object detection unit 201 may be similar to the configuration for which the description is made about the configuration elements of the learning data generation device 100 such as the model setting unit 101, the rendering unit 102, the object region setting unit 103, and the recognition model construction unit 104. The target object detection unit 201 may be included in the control unit 1c.

### [1-2. Action of Learning Data Generation Device]

An action of the learning data generation device 100 according to the embodiment will be described with reference to Fig. 1 to Fig. 4. Note that Fig. 4 is a flowchart that illustrates one example of a process flow in which the learning data generation device 100 according to the embodiment constructs the recognition model. As illustrated in Fig. 4, in step S101, the learning data generation device 100 generates the learning data that are used for construction of the recognition model in order to construct the recognition model for detecting the target objects from an image. The learning data include image data and the information of the annotations added to the target objects in the image data.

Next, in step S102, the learning data generation device 100 causes the recognition model to perform learning by using the generated learning data and thereby constructs the recognition model. Specifically, the recognition model construction unit 104 adjusts the recognition model such that in a case where the image of the target object to which the annotation is added in the image data is set as the input data of the recognition model, the contents such as the type and action of the target object included in the information of the annotation, that is, the output result as the correct answer is output. The recognition model construction unit 104 adjusts the recognition model by using various images of various target objects and thereby improves the output precision of the recognition model. The recognition model construction unit 104 stores the recognition model that already performs learning in the third storage unit 107. Note that the recognition model construction unit 104 may cause the recognition model stored in the third storage unit 107 to further perform learning and may thereby update the recognition model.

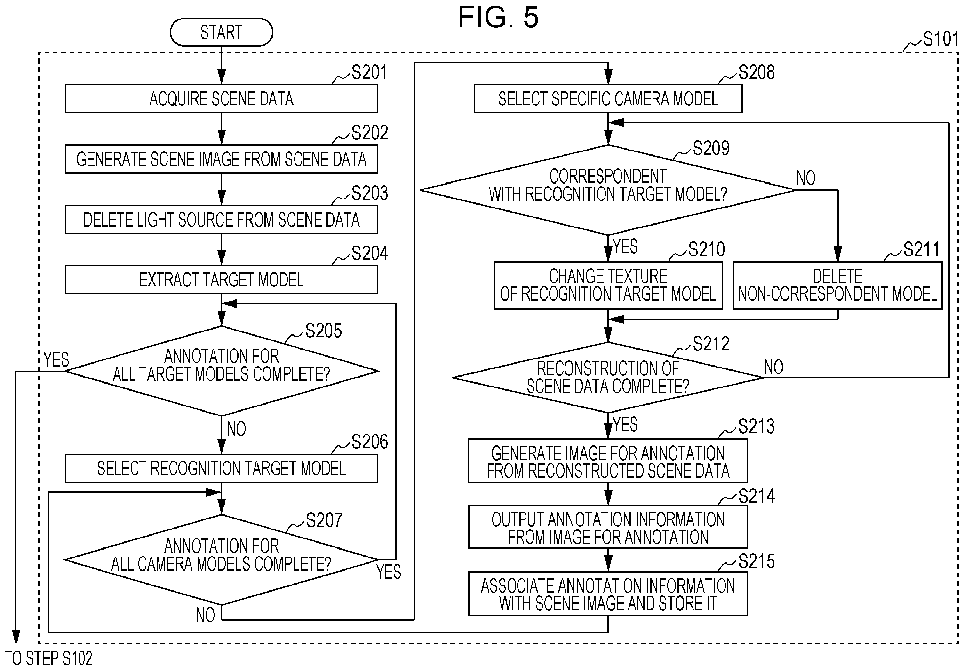

In addition, a process of step S101 in Fig. 4, that is, details of a learning data generation process by the learning data generation device 100 will be described with reference to Fig. 1 to Fig. 5. Note that Fig. 5 is a flowchart that illustrates one example of a process flow in which the learning data generation device 100 according to the embodiment generates the learning data.

First, in step S201, the rendering unit 102 of the learning data generation device 100 acquires prescribed scene data of the city 3DCG data from the first storage unit 105. For example, the scene data includes parameters related to camera model and parameters related to a front sight whose image is captured by the camera model arranged on a driver seat of an automobile which travels on a road in the city of the 3DCG. Note that the position of the camera model may be any place in the automobile or may be another place than the automobile. Although not limited to this, in this embodiment, the scene data correspond to parameters related to the sight whose image is captured by the camera model which moves together with the automobile. Note that selection, formation, and storage of the scene data that are stored in the first storage unit 105 may be performed by an operator of the server 2. For example, the operator operates, in the server 2, the city 3DCG data and selects the position and direction of the camera model in the 3DCG. In addition, the operator moves the camera model along a road or the like, for example, selects parameters related to the sight whose image is continuously captured by the camera model in the course of movement as the scene data, and stores the data in the first storage unit 105. The operator creates the scene data in various positions, directions, and movement directions of the camera model and stores the scene data in the first storage unit 105. Accordingly, the scene data that include parameters related to sights in various points of view, that is, represent scenes are formed and stored in the first storage unit 105.

The rendering unit 102 acquires the scene data that include parameters related to the sight whose image is captured by the camera model in the position and direction, which are designated by the operator of the server 2 and the learning data generation device 100, from various scene data stored in the first storage unit 105 as the prescribed scene data.

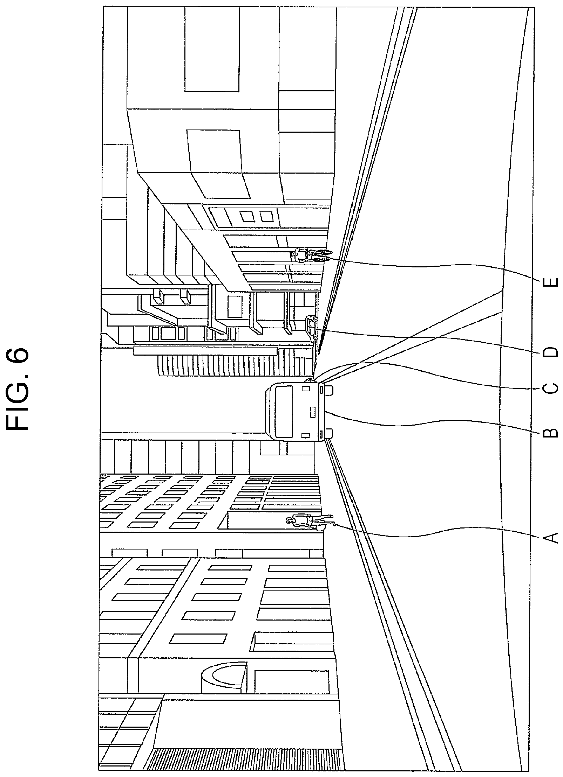

In next step S202, the rendering unit 102 generates an image (hereinafter also referred to as scene image) of the sight whose image is captured by the camera model using parameters included in the prescribed scene data. The continuously changing scene is configured with plural scenes, for example, n scenes, and n camera models that respectively correspond to the n scenes are present in the scene data. Thus, the rendering unit 102 generates the scene images of n frames, which are respectively captured by n camera models, from the scene data. The rendering unit 102 stores the generated scene images and the camera models in the second storage unit 106 while associating the generated scene images with the camera models. For example, referring to Fig. 6, one example of the scene image that is generated from the scene data by the rendering unit 102 of the learning data generation device 100 according to the embodiment is schematically illustrated. Note that the scene data may have a configuration that includes only one camera model. Here, the scene image is one example of an image for scene data.

Next, in step S203, the model setting unit 101 deletes the light source model that is set for the scene data. For example, in a case where an image is generated from the scene data in which the light source model is deleted, the whole generated image is in a state where the whole image is filled with a single color such as black.

Next, in step S204, the model setting unit 101 extracts the target model to be a target of the process from the models included in the scene data. In this embodiment, the model setting unit 101 extracts a mobile target model while following a predetermined rule. Note that the predetermined rule is a rule that the target model to be extracted be mobile. However, embodiments are not limited to this. Such a model setting unit 101 extracts models such as persons and vehicles as the target models. For example, in the scene data that include the sight illustrated in Fig. 6, the model setting unit 101 extracts target models A to E. The target model A is a pedestrian, the target model B is a bus, the target model C is a motorcycle, the target model D is an automobile, and the target model E is a bicycle.

In addition, in step S205, the model setting unit 101 assesses whether or not annotation for all the target models which are obtained in step S204 is completed. Specifically, the model setting unit 101 assesses whether or not an annotation process is completed for all the target models included in the scene images of n frames. The annotation process is processes of steps S205 to S215. The model setting unit 101 moves to step S102 in a case where the annotation process is completed (YES in step S205) but moves to step S206 in a case where the annotation process is not completed (NO in step S205).

In step S206, the model setting unit 101 selects one target model (hereinafter referred to as recognition target model) from the target models for which the annotation process is not performed. For example, the model setting unit 101 stores the target model for which the annotation process is performed in a memory, which is not illustrated, and selects the target model other than the target models stored in the memory as the recognition target model.

In next step S207, the model setting unit 101 assesses whether or not the annotation process is completed for all the camera models included in the scene data, with respect to the recognition target model. The annotation process for the camera models is the processes of steps S207 to S215. The model setting unit 101 returns to step S205 in a case where the annotation process is completed (YES in step S207) but moves to step S208 in a case where the annotation process is not completed (NO in step S207).

In step S208, the model setting unit 101 selects the camera model that is set for the recognition target model (hereinafter referred to as specific camera model) from the camera models included in the scene data. Note that the model setting unit 101 selects the camera model that is not yet used for the annotation process as the specific camera model.

In next step S209, the model setting unit 101 searches for the model included in the scene data and assesses whether or not the model is correspondent with the recognition target model. Accordingly, the model setting unit 101 extracts the recognition target model from the models. The model setting unit 101 moves to step S210 in a case where the model is correspondent with the recognition target model or the specific camera model (YES in step S209) but moves to step S211 in a case where the model is not correspondent with the recognition target model or the specific camera model (NO in step S209).

In step S210, the model setting unit 101 replaces the texture of the extracted recognition target model with a plain texture in a specific color such as white. The model setting unit 101 may replace the texture such that the recognition target model becomes luminous. The model setting unit 101 moves to step S212 after step S210.

In step S211, the model setting unit 101 deletes non-correspondent models from the scene data. In this case, the model setting unit 101 deletes the camera models other than the specific camera model. In addition, the model setting unit 101 deletes the models other than the recognition target model. For example, the model setting unit 101 may set the light reflectance of the object models other than the recognition target model to zero. The model setting unit 101 moves to step S212 after step S211.

In step S212, the model setting unit 101 assesses whether or not reconstruction of the scene data about the recognition target model is completed. The reconstruction of the scene data is reconstruction of the scene data that include only the specific camera model and the recognition target model which has the texture in the specific color as the models. The model setting unit 101 moves to step S213 in a case where the reconstruction of the scene data is completed (YES in step S212) but returns to step S209 in a case where the reconstruction of the scene data is not completed (NO in step S212). Further, the processes of steps S209 to S212 are repeated, and one scene data is thereby constructed for a combination of one specific camera model and one recognition target model. Construction of the scene data, which is realized by such processes of steps S209 to S212 is simple, and the processing amount may thus be suppressed to a low amount.

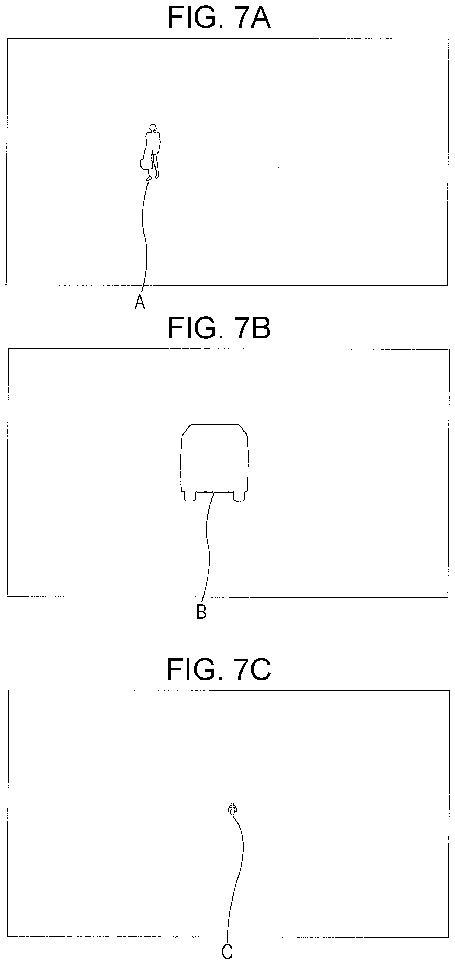

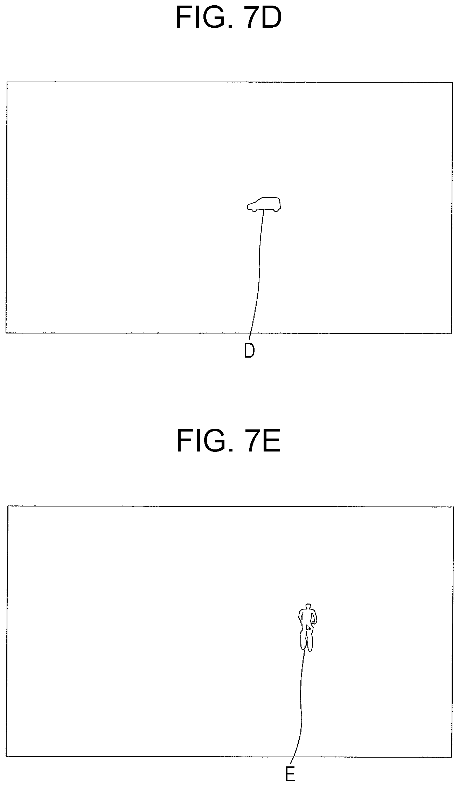

In step S213, the rendering unit 102 generates an image (hereinafter also referred to as image for annotation) from the reconstructed scene data. The rendering unit 102 generates an image of the recognition target model whose image is captured by the specific camera model by using parameters of the specific camera model and the recognition target model included in the reconstructed scene data. Such a generated image is an image that is configured with the recognition target model that has a plain texture in a specific color such as white and a plain background in black or the like. Further, the generated image may be used as an image for annotation of the recognition target model. Examples of such generated images are illustrated in Fig. 7A to Fig. 7E. Fig. 7A is an example of an image for annotation of a target model A. Fig. 7B is an example of the image for annotation of a target model B. Fig. 7C is an example of the image for annotation of a target model C. Fig. 7D is an example of the image for annotation of a target model D. Fig. 7E is an example of the image for annotation of a target model E. Because the image for annotation is generated from the scene data that include one specific camera model and one recognition target model, a generation process of the image for annotation is simple, and the processing amount may thus be suppressed to a low amount. Here, the image for annotation is one example of an image for learning data.

Note that the image for annotation generated by the rendering unit 102 is not limited to an image that is generated from one set of reconstructed scene data and includes one recognition target model. The rendering unit 102 may generate one image for annotation from plural sets of reconstructed scene data that correspond to plural recognition target models. Further, the model setting unit 101 may generate one set of reconstructed scene data that include plural recognition target models, and the rendering unit 102 may generate one image for annotation from this set of reconstructed scene data. Such an annotation image may include plural recognition target models whose images are captured by the same camera model.

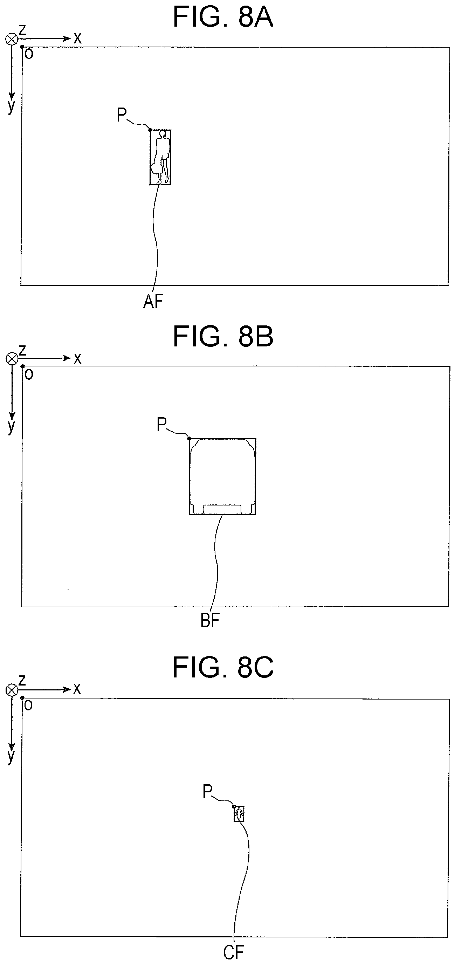

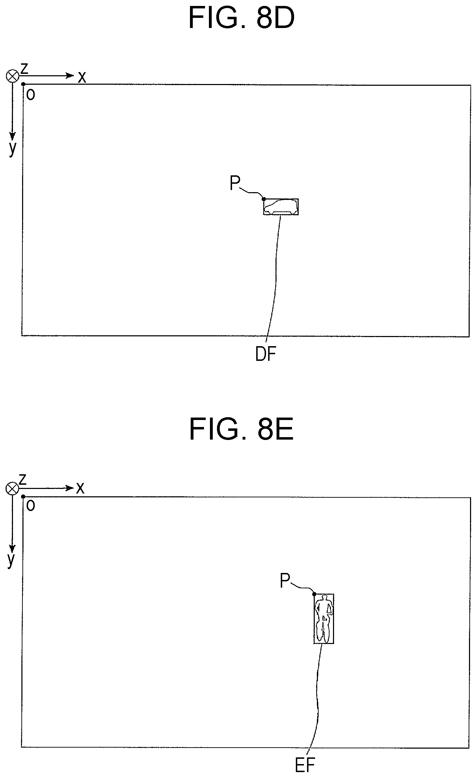

Next, in step S214, the object region setting unit 103 obtains the annotation information of the recognition target model included in the image for annotation from the image for annotation that is generated in step S213. The object region setting unit 103 sets information of the position and region of the recognition target model in the image for annotation as the annotation information. For example, the object region setting unit 103 forms the annotation frame that surrounds the recognition target model and is circumscribed around the recognition target model and sets the position, shape, and size of the annotation frame as the annotation information. The annotation frame may be a polygon such as a square, whose shape is easily specified and is a square in this embodiment. For example, referring to Fig. 8A to Fig. 8E, examples AF to EF of the square annotation frames that are set for the target models A to E of the images for annotation in Fig. 7A to Fig. 7E are illustrated. The position and size of the annotation frame are represented by an image coordinate system, which is a coordinate system set for the image for annotation.

As illustrated in Fig. 8A to Fig. 8E, for example, the object region setting unit 103 sets the origin O at the upper left corner of the square image for annotation. In addition, for the image for annotation, the object region setting unit 103 sets an x axis that extends from the origin O in the horizontally right direction while having positive values and a y axis that extends from the origin O in the vertically downward direction while having positive values. In addition, the object region setting unit 103 may set a z axis in the depth direction of the image for annotation, that is, the direction that is perpendicular to the xy plane. In this embodiment, each of the values on the x axis and the y axis is defined by a picture element coordinate, specifically by the number of picture elements, that is, the number of pixels from the origin O. The value on the z axis may be defined by a distance that is set in the 3DCG.

Further, the object region setting unit 103 sets a reference point P at the upper left corner in the annotation frame of the recognition target model and provides the planar position of the annotation frame by using the picture element coordinate values of x and y of the reference point P. In addition, the object region setting unit 103 may provide the position of the annotation frame in the depth direction by using a value of the reference point P on the z axis. The value of the reference point P on the z axis may be the distance between the recognition target model surrounded by the annotation frame and the camera model. Such a distance may be acquired from position information of the recognition target model, which the scene data have, or position information of the recognition target model, which is set for the image for annotation, and position information of the camera model. In addition, the object region setting unit 103 provides the size of the annotation frame by using the length in the x axis direction and the length in the y axis direction of the annotation frame.

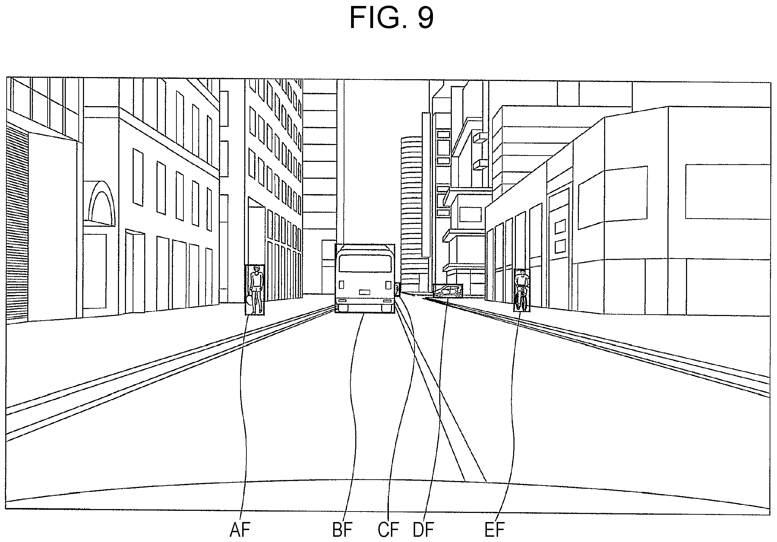

Next, in step S215, the object region setting unit 103 stores the coordinates of the reference point P of the annotation frame, the lengths of the annotation frame in the x axis and y axis directions, and the contents such as the type of the recognition target model as the annotation information of the recognition target model in the second storage unit 106. In this case, the object region setting unit 103 specifies the scene image of the same camera model as the image for annotation that includes the recognition target model from the scene images stored in the second storage unit 106 and associates the specified scene image with the annotation information. The scene images stored in the second storage unit 106 are the images that are generated by the rendering unit 102 in step S202. An example of an image in which the annotation frames indicated by the annotation information are superimposed on the scene image corresponding to the annotation information is illustrated in Fig. 9. Note that Fig. 9 is a diagram in which the annotation frames of the target models are superimposed on the scene image of Fig. 6. For example, one scene image and plural pieces of annotation information that correspond to the scene image are acquired from the second storage unit 106, and it is thereby possible to specify the regions of the target models A to F in the scene image. Then, the object region setting unit 103 returns to step S207 after step S215 is completed.

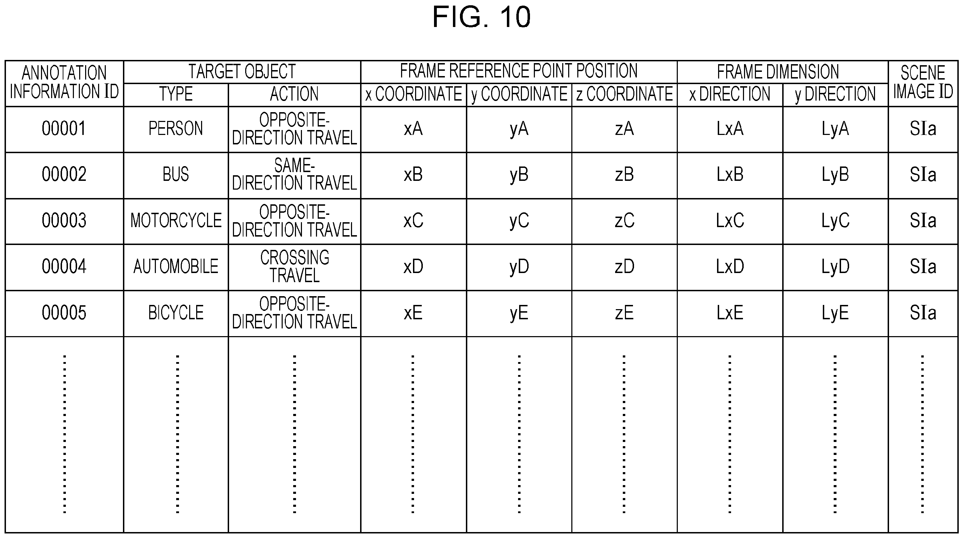

Note that referring to Fig. 10, an example of the annotation information that is stored in the second storage unit 106 is illustrated. The annotation information includes identifier (ID) information of the annotation information, the target model, that is, the contents of the target object, the coordinates of the reference point P of the annotation frame, the size of the annotation frame in the x axis direction, the size of the annotation frame in the y axis direction, ID information of the scene image that corresponds to the annotation information, and so forth. The IDs of the annotation information in Fig. 10 are respective examples of the annotation information of the target models A to E.

As described above, in a series of processes of steps S206 to S 215, the processes of steps S207 to S215 are repeated, and the annotation process for all the camera models is thereby performed with respect to one target model. In addition, in a series of processes of steps S204 to S215, the processes of steps S205 to S215 are repeated, and the annotation process is thereby performed with respect to all the target models.

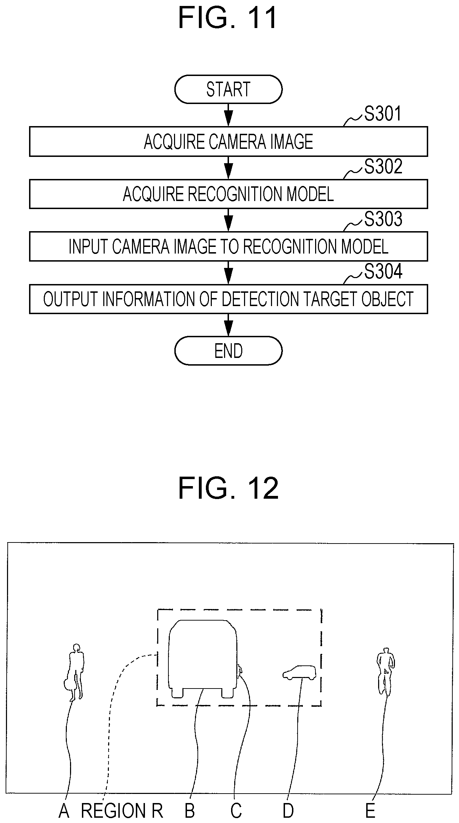

Next, an action of the target object recognition device 200 according to the embodiment will be described with reference to Fig. 11. Note that Fig. 11 is a flowchart that illustrates one example of a process flow in which the target object recognition device 200 according to the embodiment recognizes the target object from an image. As illustrated in Fig. 11, first, in step S301, the target object detection unit 201 of the target object recognition device 200 acquires an image that is photographed by the image-capturing device 1a (hereinafter also referred to as camera image) from the image-capturing device 1a that is mounted on the automobile 1. Next, in step S302, the target object detection unit 201 acquires the recognition model from the fourth storage unit 202. The recognition model may be a recognition model that corresponds to the image-capturing device 1a. For example, in a case where the image-capturing device 1a photographs a front part from the driver seat of the automobile 1, the recognition model may be about a sight that is seen in the front part from the driver seat.

In addition, in step S303, the target object detection unit 201 inputs the acquired camera image to the recognition model and acquires an output result from the recognition model. In this case, the recognition model detects a prescribed target object in the camera image and outputs the detection result to the target object detection unit 201. The prescribed target object is the target object that is set to be detected from the image by the recognition model when the recognition model is constructed and includes the target object that is correspondent with the target model in the description of the process of step S101 in Fig. 4.

Next, in step S304, the target object detection unit 201 outputs information of the detected target object. Examples of the information of the target object may be the type, position, movement direction, and so forth of the target object. For example, the target object detection unit 201 may output the information of the target object to the report unit 1b of the automobile 1. Further, the report unit 1b may emphatically display the target object in the camera image of the image-capturing device 1a, which is displayed on the display of the report unit 1b, and may thereby report the target object to the driver. Alternatively, the report unit 1b may report the information of the target object by sound. Alternatively, the target object detection unit 201 may output the information of the target object to the control unit 1c of the automobile 1. The control unit 1c may control an action of the automobile 1 based on the information of the target object. In a case where the automobile 1 has the autonomous driving function and where the control unit 1c determines that the target object causes trouble or danger to travel of the automobile 1, the control unit 1c may perform control such as stopping or decelerating the automobile 1.

### [1-3. Effects and Others]

In the learning data generation device 100 according to the above-described embodiment, the reconstructed scene data, which are one example of the scene data for generating learning data, are generated by deleting the models other than the recognition target model from the scene data. Such a process of reconstructing the scene data is simple, and the processing amount may thus be suppressed to a low amount. In addition, because the reconstructed scene data include only the specific camera model and the recognition target model in a specific color as the models, the data amount may be suppressed to a low amount. Such a process of generating the image for annotation from the reconstructed scene data is simple, and the processing amount may thus be suppressed to a low amount. In addition, the generated image for annotation includes only the recognition target model as a photographed object. Thus, a process of forming the annotation frame for the recognition target model in the image for annotation is simple, and the processing amount may thus be suppressed to a low amount. In such a manner, the annotation process for the recognition target model of the scene data is simple, and the processing amount may thus be suppressed to a low amount. Thus, the learning data generation device 100 may simplify a process of performing the annotation process and constructing the learning data by using CG data.

Further, in the learning data generation device 100 according to the embodiment, in a case where plural recognition target models are included in the scene data, the scene data are reconstructed for each of the plural recognition target models. Accordingly, the reconstructed scene data are generated for each of the recognition target models. Thus, even in a case where the scene data include plural recognition target models, it is possible to specify the region of each of the recognition target models by using the image for annotation, which is generated from the reconstructed scene data.

Further, in the learning data generation device 100 according to the embodiment, because the region of the recognition target model is defined by the annotation frame, setting of the region is easy. For example, the shape, size, and position of the annotation frame are decided, and the region of the recognition target model may thereby be decided. Such information of the annotation frame is manageable data as the input data of the region of the recognition target model in the learning data in machine learning such as deep learning.

### [First Modification Example]

### [2-1. Action of Learning Data Generation Device According to First Modification Example]

In the learning data generation device 100 according to the embodiment, the model setting unit 101 generates the reconstructed scene data that include only one target model. Further, the rendering unit 102 generates the image for annotation that includes only one target model from one set of reconstructed scene data. In an action of the learning data generation device according to a first modification example of the embodiment, the model setting unit 101 generates the reconstructed scene data that include plural target models. In addition, the rendering unit 102 generates the image for annotation that includes plural target models. Further, the object region setting unit 103 forms the annotation frame for each of the plural target models included in the image for annotation. In this case, in a case where two target models are displayed while partially overlapping with each other, the object region setting unit 103 forms the annotation frames for portions of the target models that are seen. In the following, the first modification example will be described while different points from the embodiment are focused.

Specifically, in step S206 in Fig. 5, the model setting unit 101 selects plural recognition target models. Then, the model setting unit 101 performs the processes of steps S207 to S212 in Fig. 5 similarly to the embodiment. In this modification example, in steps S207 to S212, the model setting unit 101 deletes the models other than the specific camera model and the plural recognition target models from the scene data. Then, the model setting unit 101 replaces the texture by using a different specific color for each of the plural recognition target models in the scene data. That is, the model setting unit 101 respectively applies different specific colors to the mutually different plural recognition target models such that the plural recognition target models do not have the same color. Accordingly, the scene data are reconstructed which include the plural recognition target models in mutually different specific colors with respect to the specific camera model. In addition, the model setting unit 101 associates the recognition target models included in the reconstructed scene data with the specific colors that are respectively set for the recognition target models and stores the recognition target models and the specific colors in a memory or the like, which is not illustrated. For example, the model setting unit 101 reconstructs the scene data that include only the recognition target models A to E. Then, the model setting unit 101 applies a different specific color to each of the recognition target models A to E.

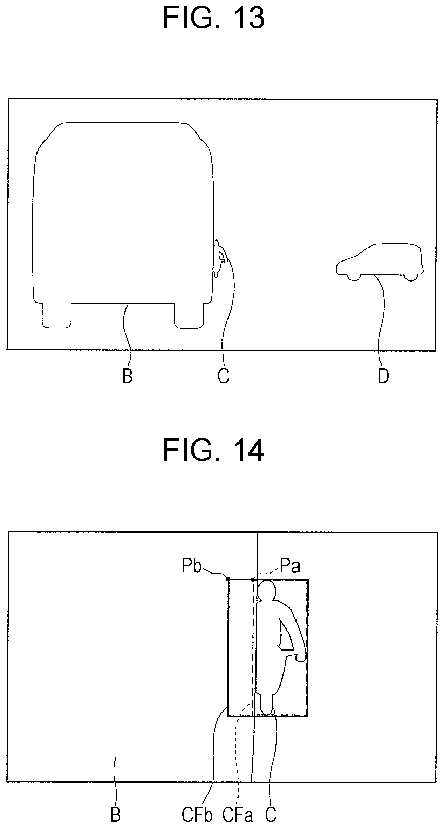

Similarly to step S213 in Fig. 5, the rendering unit 102 generates one image for annotation from one set of reconstructed scene data that include the plural recognition target models. For example, the rendering unit 102 generates the image for annotation as illustrated in Fig. 12, which includes the recognition target models A to E and in which the camera model is the same. Note that Fig. 12 is an example of the image for annotation that includes the plural target models A to E. The image of target models A to E in Fig. 12 correspond to the same scene image. In addition, referring to Fig. 13 and Fig. 14, a diagram in which a region R which includes the target models B to D in Fig. 12 is enlarged is illustrated, and a diagram in which the target model C in Fig. 13 is enlarged is illustrated.

In this modification example, as described above, the specific colors that are set for the recognition target models A to E are not the same but mutually different. Accordingly, in the image for annotation, it is possible to specify and distinguish the recognition target models A to E based on the specific colors. Thus, in the image for annotation, the object region setting unit 103 extracts the respective plural recognition target models and their regions based on the relationships between the recognition target models and the specific colors, which are stored in the memory which is not illustrated. In addition, the object region setting unit 103 adds the annotation information such as the annotation frames to the extracted recognition target models.

As illustrated in Fig. 13 and Fig. 14, in the image for annotation, the recognition target model B may be displayed while being superimposed on a portion of the recognition target model C. The object region setting unit 103 performs the annotation process also by using such an image for annotation. In this case, the object region setting unit 103 specifies the region of each of the recognition target models B and C in the image for annotation. For example, the object region setting unit 103 may specify each of the regions of the recognition target models B and C based on the specific color of each of the recognition target models B and C. The region of the recognition target model C that is specified is the region in the specific color of the recognition target model C. This region is the region of the recognition target model C, which is not covered by the recognition target model B but is seen, and is a visible region. In addition, the object region setting unit 103 forms a visible annotation frame CFa that surrounds the visible region of the recognition target model C. Then, the object region setting unit 103 calculates the position of a reference point Pa of the visible annotation frame CFa and the size of the visible annotation frame CFa. Note that a frame CFb is an entirety annotation frame that surrounds the whole recognition target model C, and a point Pb is the reference point of the entirety annotation frame CFb. As described in the embodiment, it is possible to set the entirety annotation frame CFb and the reference point Pb by using the image for annotation that is generated from the reconstructed scene data which includes only the recognition target model C.

The recognition model construction unit 104 causes the recognition model to perform learning by using the image of the portion that is the visible portion of the target model as the learning data from the annotation information of the target model and the scene image that corresponds to the annotation information. Accordingly, the recognition model may be constructed so as to detect the target object from an image of a portion of the target object, and the detection precision of the target object may thereby be improved.

### [2-2. Effects]

In the learning data generation device according to the above-described first modification example, the scene data that include plural target models are reconstructed. In addition, in the image for annotation that is generated from the reconstructed scene data, the region of each of the target models is specified. In this case, because the specific colors of the target models are different among the different target models, specifying the region of each of the target models becomes easy. Further, in a case where another target model is seen to be superimposed on a specific target model, the annotation frame is formed for the region of the specific target model, which is not covered by the other target model but is seen. The region of such an annotation frame may target a portion of the region of the target model. Accordingly, it becomes possible to calculate the visible region that is actually displayed as an image with respect to the region in which the target model is present and the ratio of the visible region to the region of the target model. Thus, the learning data in which the ratio of the visible region is lower than 100% are used, and the recognition model that is robust to occlusion may thereby be generated. Further, because the learning data, in which the ratio of the visible region is excessively low, highly possibly hinders learning, the learning data in which the ratio of the visible region is lower than 50% are not used, for example, and thereby the recognition model that prevents over-learning may also be generated. Thus, the recognition model that is constructed by using such learning data may improve the precision of detection of the target object from an image.

### [Second Modification Example]

### [3-1. Action of Learning Data Generation Device According to Second Modification Example]

In the learning data generation device 100 according to the embodiment, the object region setting unit 103 associates the annotation information added to the target model in the image for annotation with the scene image that is generated from the scene data by the rendering unit 102. The learning data generation device according to a second modification example of the embodiment adds changes to the scene data and associates an image that is generated from the scene data, which are changed, by the rendering unit 102 (hereinafter also referred to as changed scene image) with the annotation information of the target model. Then, the recognition model construction unit 104 associates the annotation information of the target model with the scene image and the changed scene image that are generated from the unchanged and changed scene data, uses those as the learning data, and thereby constructs the recognition model. In the following, the second modification example will be described while different points from the embodiment and the first modification example are focused.

Specifically, the learning data generation device according to the second modification example performs switching of the models between the models with the same volume in a state where the configuration in a sight of the camera such as the arrangement of the models and the camera model is fixed with respect to the scene data. In addition, the learning data generation device adds changes to the scene data such that the information about the annotation frame and the type and action of the target model are not changed. That is, the learning data generation device adds changes to the model of the scene data based on the information of the annotation frame.

For example, the model setting unit 101 of the learning data generation device changes the surroundings of the target model. In this case, the model setting unit 101 changes the models around the target model. Specifically, the model setting unit 101 may change the shapes and textures of the immovable object models such as buildings and plants. Further, the model setting unit 101 may change the light source models and may thereby change the time zone of the sight to morning, day, evening, or night. Further, the model setting unit 101 may change the background models to change the background such as the sky or may change the environment models to change the weather of the sight.

Further, the model setting unit 101 may change the target models and movable object models other than the target model. In this case, the model setting unit 101 may maintain the types and actions of the target model and the movable object model. For example, in a case where the type of the model is person, the model setting unit 101 may change the information about the person such as age, sex, physique, and clothes. Further, in a case where the type of the model is automobile, the model setting unit 101 may change the information about the automobile such as color, shape, and vehicle type. Further, in a case where the type of the model is bicycle, the model setting unit 101 may change the information about the bicycle such as color, shape, and bicycle type.

As described above, the target model is not subject to a change in the volume such as the size but is subject to a change in other information. Thus, similarly to the embodiment, even in a case where the annotation frame of the target model is formed by using the changed scene data, frame information such as the position, shape, and dimensions of the annotation frame does not change between the unchanged target model and the changed target model.

Thus, the rendering unit 102 of the learning data generation device generates various changed scene images by using various changed scene data, and plural scene images that correspond to one piece of annotation information are generated. Accordingly, variations of the learning data of the recognition model construction unit 104 increase. For example, the region of the annotation frame in an image includes an image of the target model and images of surroundings of the target model. Thus, variations of the image in the annotation frame increase not only by changing the target models but also by changing the surrounding object models, the light source models, the background models, and the environment models. The recognition model construction unit 104 uses images of various variations of the target model as the learning data and thereby constructs the recognition model whose detection precision of the target object is improved.

### [3-2. Effects]

In the learning data generation device according to the above-described second modification example, the rendering unit 102 may generate the scene images from the scene data and the changed scene data. Accordingly, in the learning data, combinations of the annotation information of the target model and the scene image that corresponds to the annotation information, which are associated with each other, increase. Thus, because the variations of the learning data increase, the recognition model may improve the precision of detection of the target object from an image.

Further, in the learning data generation device according to the second modification example, because the target model is subject to a change based on the information of the annotation frame in a case where the scene data are changed, regeneration of the information of the annotation frame for the changed target model may become unnecessary or simple. For example, in a case where the target model is subject to a change such that the information of the annotation frame is not changed when the scene data are changed, regeneration of the information of the annotation frame for the changed target model is unnecessary. Thus, simplification of a changing process of the scene data becomes possible.

### [Third Modification Example]

### [4-1. Action of Learning Data Generation Device According to Third Modification Example]

The learning data generation device according to the second modification example changes the scene data such that the information about the annotation frame is not changed. The learning data generation device according to a third modification example of the embodiment changes the annotation frame as needed in response to the changes in the size and shape of the target model of the scene data. In the following, the third modification example will be described while different points from the embodiment, the first modification example, and the second modification example are focused.

Specifically, the learning data generation device according to the third modification example performs switching of the models between the models in a state where the configuration in a sight of the camera such as the arrangement of the models and the camera model is fixed with respect to the scene data. In addition, the learning data generation device adds changes to the scene data without changing the type or action of the target model.

For example, the model setting unit 101 of the learning data generation device changes the target models in the scene data while maintaining the type and action. In a case where the type of the target model is person and the information about the person is changed, for example, the model setting unit 101 changes a child to an adult or changes an adult having nothing to an adult putting up an umbrella. Accordingly, the region that is occupied by the changed target model becomes larger, and the changed target model may not fit the annotation frame that is set for the unchanged target model. Alternatively, for example, as for the target model, in a case where an adult is changed to a child or an adult putting up an umbrella is changed to an adult having nothing, the region for a part other than the changed target model becomes larger in the image in the unchanged annotation frame, and the model other than the changed target model may be included in this region. In both of the above-described two cases, the image in the annotation frame may not be proper as the image for annotation for the changed target model. Thus, the learning data generation device may again form the annotation frame.

Specifically, the model setting unit 101 acquires the annotation information of the unchanged target model that corresponds to the changed target model from the second storage unit 106. The annotation information is present while corresponding to each of plural camera models included in the scene data. In the changed scene data, the model setting unit 101 changes the texture of the changed target model to a specific color. In addition, with respect to each of the camera models, the rendering unit 102 generates an image of the region in the annotation frame that is defined by the annotation information which corresponds to the camera model and the vicinity of the annotation frame. The size of this region may be decided based on the change amount such as the change ratio between the sizes of the unchanged target model and the changed target model. For example, the region may be set smaller than the annotation frame in a case where the changed target object becomes smaller and may be set larger than the annotation frame in a case where the changed target object becomes larger.

The object region setting unit 103 extracts the plain region in the specific color in the generated image and forms the annotation frame that surrounds the region in the specific color as the changed annotation frame. The object region setting unit 103 stores information of the changed annotation frame as the annotation information of the changed target object in the second storage unit 106. Extraction of the region in the specific color by the object region setting unit 103 is performed in a small image adjacent to the region of the unchanged annotation frame, and the calculation amount for the process may thus be suppressed to a low amount. Further, with respect to each of the camera models, the rendering unit 102 generates a changed scene image that corresponds to the camera model from the changed scene data. The object region setting unit 103 associates the annotation information of the changed target object with the changed scene image based on each of the camera models.

Note that in a case where the target model is changed to a larger model in the scene data, the model setting unit 101 assesses whether or not the changed target model collides or contacts, that is, interferes with another object model and may change the target model in a case where collision and contact do not occur between the object models. In this case, the model setting unit 101 may compare the region of the changed target model with the region of the other object model or may compare the region of the annotation frame of the changed target model with the region of the other object model or the annotation frame thereof.

In addition to the above or otherwise than the above, in the scene data, in a place whose image is not captured by the camera model of the scene data, the model setting unit 101 may not assess whether or not the changed target model collides or contacts with the other object model in a case where the target model is changed. In this case, the model setting unit 101 may assess that it is possible to change the target model.

Alternatively, in the scene data, the model setting unit 101 may be prohibited from changing the target model to a larger model.

As described above, various kinds of annotation information and various images that correspond to the various kinds of annotation information are generated. Further, the recognition model construction unit 104 uses images of such various variations of the target model as the learning data and thereby constructs the recognition model whose detection precision of the target object is improved.

### [4-2. Effects]

In the learning data generation device according to the above-described third modification example, the information of the annotation frame may be regenerated in response to the change of the target model. Accordingly, the degree of freedom of the change of the target model increases. Thus, in the learning data, variations of the target model to be a target of the annotation information increase. Further, because the annotation frame of the changed target model is set based on a changed image of the changed target model and the surroundings thereof, it becomes possible to suppress the calculation amount for the setting.

Further, in the learning data generation device according to the third modification example, in a case where the changed target model interferes with another object model, the target model may not be changed. Accordingly, the target model may be changed smoothly and in accordance with the actual situation. For example, a case where the changed target model interferes with the other object model in an overlapping manner is a case with low realizability, and it is possible that such a case is not included in the learning data. Thus, the detection precision of the recognition model may be improved.

Further, in the learning data generation device according to the third modification example, in a case where an interfering portion between the changed target model and the other object model is included in the region whose image is not captured by the camera model, that is, the region which is not depicted by the scene image, the target model may be changed regardless of presence or absence of interference. Accordingly, because the interfering portion whose image is not captured by the camera model is excluded from targets of the assessment about presence or absence of interference, simplification of a changing process of the target model becomes possible.

Further, in the learning data generation device according to the third modification example, in a case where the changed target model becomes larger than the unchanged target model, the target model may not be changed. The assessment about presence or absence of the interference between the changed target model and another object model becomes unnecessary. Thus, simplification of the changing process of the target model becomes possible.

### [5. Other Modification Examples]

In the above description, as exemplification of the techniques disclosed in the present disclosure, the embodiment and the modification examples are described. However, the techniques in the present disclosure are not limited thereto but are applicable to modification examples of the embodiment and other embodiments in which appropriate change, substitution, addition, omission, and so forth are performed. Further, it is possible to make different embodiments or modification examples by combining the configuration elements described in the embodiment and the modification examples.

A description is made about cases where the image recognition system 10 that includes the learning data generation device 100 and the target object recognition device 200 according to the embodiment and the modification examples is applied to an automobile. The image recognition system may be applied to any system as long as the image recognition system is a system that recognizes a target object from an image. For example, the image recognition system may be applied to a system of a surveillance camera. In this case, the target object recognition device 200 may be mounted on the surveillance camera, and the learning data generation device 100 may be mounted on the surveillance camera or a device such as a sever, which is separate from the surveillance camera. Further, the 3DCG data used for the image recognition system are not limited to the city 3DCG data but may be changed in accordance with the target that is photographed by the image-capturing device to which the target object recognition device 200 is applied. For example, in a case where the target object recognition device 200 is applied to a surveillance camera in a station, the 3DCG data may be 3DCG data of a station yard.

It should be noted that general or specific embodiments of the present disclosure may be implemented as a system, a device, a method, an integrated circuit, a computer program, a computer-readable recording medium such as a recording disk, or any selective combination thereof. The computer-readable recording medium includes a non-volatile recording medium such as a CD-ROM, for example.

For example, the configuration elements included in the image recognition system according to the embodiment and the modification examples are typically realized as large scale integration (LSI) that is an integrated circuit. Those configuration elements may be formed into individual chips or formed into one chip that includes a portion or all of those. Further, formation of the integrated circuit is not limited to LSI, but the integrated circuit may be realized as a dedicated circuit or a general purpose processor. Afield programmable gate array (FPGA), which is programmable after manufacture of LSI, or a reconfigurable processor, in which connection and settings of circuit cells inside the LSI are reconfigurable, may be used.

Note that in the embodiment and the modification examples, the configuration elements may be realized by configuring those with dedicated hardware or by executing software programs that are suitable for the configuration elements. A program execution unit such as a CPU or a processor reads out and executes software programs that are recorded in a recording medium such as a hard disk or a semiconductor memory, and the configuration elements may thereby be realized.

A portion or all of the configuration elements may be configured with detachable integrated circuit (IC) cards or individual modules. The IC card or the module is a computer system that is configured with a microprocessor, a ROM, a RAM, and so forth. The IC card or the module may include the LSI or system LSI. The microprocessor acts in accordance with a computer program, and the IC card or the module thereby achieves a function thereof. Those IC card and module may be tamper-resistant.

Further, the techniques of the present disclosure are not limited to the learning data generation device but may be realized by a learning data generation method as described in the following. For example, this learning data generation method is a learning data generation method of generating learning data by using CG data that include various models, the learning data generation method including: acquiring scene data that include information of a sight whose image is captured by a camera model among the models in the CG data; generating an image for scene data from the scene data; generating scene data for generating learning data from the scene data; generating an image for learning data from the scene data for generating learning data; setting a specific object region that is a region of a specific object model in object models among the models in the image for learning data; generating the learning data that include the image for scene data and information of the specific object region, which are associated with each other; and selecting the specific object model from the object models, deleting the models other than the specific object model from the scene data, and making the specific object model a specific color in the generating of the scene data for generating learning data.

Note that the method may be realized by a circuit such as an MPU, a CPU, a processor, or LSI, an IC card, an individual module, or the like.

Further, the techniques of the present disclosure may be realized by a software program or digital signals that are formed with a software program or may be a non-transitory computer-readable recording medium that records a program. For example, the processes in the embodiment and the modification examples are realized by a following program. For example, this program causes a computer to execute: acquiring scene data that include information of a sight whose image is captured by a camera model among models in CG data that include various models; generating an image for scene data from the scene data; generating scene data for generating learning data from the scene data; generating an image for learning data from the scene data for generating learning data; setting a specific object region that is a region of a specific object model in object models among the models in the image for learning data; generating the learning data that include the image for scene data and information of the specific object region, which are associated with each other; and selecting the specific object model from the object models, deleting the models other than the specific object model from the scene data, and making the specific object model a specific color in the generating of the scene data for generating learning data.

Note that the program or the digital signals formed with the program may be recorded in a computer-readable recoding medium such as a flexible disk, a hard disk, an SSD, a CD-ROM, an MO, a DVD, a DVD-ROM, a DVD-RAM, a Blu-ray® disc (BD), or a semiconductor memory, for example. Further, the program or the digital signals formed with the program may be transmitted via an electric communication line, a wireless or wired communication line, a network represented by the Internet, data broadcasting, or the like. Further, the program or the digital signals formed with the program are recorded in a recording medium and transferred or are transferred via a network or the like and may thereby be conducted by another independent computer system.

Further, all the numerals such as ordinal numbers and amounts that are used in the above are exemplified for specifically describing the techniques of the present disclosure, and the present disclosure is not restricted by the exemplified numerals. Further, the connection relationships among the configuration elements are exemplified for specifically describing the techniques of the present disclosure, and the connection relationships that realize the functions of the present disclosure are not limited to those.

Further, the divisions of function blocks in the block diagram are examples. Plural function blocks may be realized as one function block, one function block may be divided into plural function blocks, or a portion of functions may be moved to another function block. Further, the functions of plural function blocks that have similar functions may be processed by a single piece of hardware or software in parallel or in a time-division manner.

The present disclosure is usable for a technique of adding an annotation to an image.

## Claims

1. A learning data generation device that configured to generate learning data by using CG data which include a plurality of models, the learning data generation device comprising:
a processor; and
a memory storing thereon a computer program, which when executed by the processor, causes the processor to perform operations including
acquiring first scene data that include one or more parameters related to the plurality of models in the CG data,
generating a scene data image using the one or more parameters included in the first scene data,
selecting a specific object model from a plurality of object models which are included in the plurality of models,
setting the one or more parameters to delete other models which are other than the specific object model and to make the specific object model a specific color, to generate second scene data,
generating a learning data image using the set one or more parameters which are included in the second scene data,
setting a specific object region that is a region of the specific object model in the learning data image,
generating the scene data image and information of the specific object region, which are associated with each other, as the learning data, and
recording the learning data into a recording medium.

2. The learning data generation device according to Claim 1, wherein
in the selecting, a plurality of specific object models are selected, and the second scene data are generated for each of the plurality of specific object models.

3. The learning data generation device according to Claim 1, wherein
in the selecting, the plurality of specific object models are selected,
in the setting of the one or more parameters, the other models other than the plurality of specific object models are deleted from the first scene data, and specific colors which are applied to the plurality of specific object models are different from each other,
in the generating of the learning data image, the learning data image is generated from the second scene data that include the plurality of specific object models, and
in the setting of the specific object region, in a case where other specific object model is superimposed on a part of area of one specific object model in the learning data image, a region of the one specific object model which does not include the part of area is set as the specific object region.

4. The learning data generation device according to Claim 1, wherein
in the setting of the specific object region, an annotation frame that surrounds the specific object region is formed in the learning data image, and information of the annotation frame is generated as the information of the specific object region.

5. The learning data generation device according to Claim 1, wherein
in the setting of the one or more parameters, one of the plurality of models in the first scene data is changed, and
in the generating of the learning data image, the scene data image that is associated with the information of the specific object region is generated from the first scene data in which the one of the plurality of models is changed.

6. The learning data generation device according to Claim 5, wherein
in the setting of the specific object region, an annotation frame that surrounds the specific object region is formed in the learning data image, and information of the annotation frame is set as the information of the specific object region, and
in the setting of the one or more parameters, the one of the plurality of models in the first scene data is changed based on the information of the annotation frame.

7. The learning data generation device according to Claim 5, wherein
in the setting of the one or more parameters, the specific object model in the first scene data is changed,
in the generating of the learning data image, a changed image of (i) the changed specific object model and (ii) surroundings of the changed specific object model is generated based on the information of the specific object region of the specific object model to be changed, and
in the setting of the specific object region, the specific object region of the changed specific object model is set based on the changed image.

8. The learning data generation device according to Claim 7, wherein
the setting of the one or more parameters includes determining whether interference between the changed specific object model and other object models is present or not, and the specific object model is not changed in a case where the interference is present.

9. The learning data generation device according to Claim 8, wherein
in the setting of the one or more parameters, in a case where an interfering portion between the changed specific object model and the other object model is included in a region that is not depicted by the scene data image, the specific object model is changed regardless of presence or absence of the interference.

10. The learning data generation device according to Claim 7, wherein
in the setting of the one or more parameters, the specific object model is not changed in a case where the changed specific object model becomes larger than the specific object model.

11. A learning data generation method of generating learning data from CG data that include a plurality of models, the learning data generation method comprising:
acquiring first scene data that include one or more parameters related to the plurality of models in the CG data,
generating a scene data image using the one or more parameters included in the first scene data,
selecting a specific object model from a plurality of object models which are included in the plurality of models,
setting the one or more parameters to delete other models which are other than the specific object model and to make the specific object model a specific color, to generate second scene data,
generating a learning data image using the set one or more parameters which are included in the second scene data,
setting a specific object region that is a region of the specific object model in the learning data image,
generating the scene data image and information of the specific object region, which are associated with each other, as the learning data, and
recording the learning data into a recording medium.

12. A machine learning method comprising:
inputting the learning data that are generated by the learning data generation method according to Claim 11;
updating a recognition model by using the learning data;
recognizing the specific object by the updated recognition model and outputting contents of a type and an action of the specific object in a case where an image that includes the specific object is input.

13. A non-transitory recording medium storing thereon a computer program, which when executed by the processor, causes the processor to perform operations including:
acquiring first scene data that include one or more parameters related to a plurality of models in CG data,
generating a scene data image using the one or more parameters included in the first scene data,
selecting a specific object model from a plurality of object models which are included in the plurality of models,
setting the one or more parameters to delete other models which are other than the specific object model and to make the specific object model a specific color, to generate second scene data,
generating a learning data image using the set one or more parameters which are included in the second scene data,
setting a specific object region that is a region of the specific object model in the learning data image,
generating the scene data image and information of the specific object region, which are associated with each other, as the learning data, and
recording the learning data into a recording medium.
